# FASCICULE DE BREVET EUROPEEN

(11) **EP 0 714 902 B1**
(45) Date de publication et mention de la délivrance du brevet: **16.04.2003**
(21) Numéro de dépôt: 95402429.5
(22) Date de dépôt: 02.11.1995
(51) Int. Cl.: C07F 13/00, B01J 31/32

(54) **Nouveaux composés du rhénium et de l'aluminium, leur préparation et leur utilisation en tant que catalyseurs**
Rhenium- und Aluminiumverbindungen, ihre Herstellung und Verwendung als Katalysatoren
Rhenium and aluminium compounds, their preparation and their use as catalysts

(30) Priorité: 04.11.1994 FR 9413348
(43) Date de publication de la demande: 05.06.1996
(73) Titulaire: INSTITUT FRANCAIS DU PETROLE, 92502 Rueil-Malmaison (FR)
(72) Inventeur: Commereuc, Dominique, F-92190 Meudon (FR)

(56) Documents cités:
- EP-A- 0 444 265
- EP-A- 0 769 323
- DE-A- 4 009 910
- US-A- 4 454 368
- US-A- 5 135 958

## Description

La présente invention concerne de nouveaux composés du rhénium et de l'aluminium, leur préparation et leur utilisation comme catalyseurs, en particulier pour la métathèse des oléfines en phase homogène.

Les composés du rhénium solubles capables de catalyser en phase homogène la réaction de métathèse des oléfines sont très peu nombreux. Il est de plus indispensable, pour promouvoir leur activité, de les associer à un cocatalyseur, le plus souvent un composé de l'aluminium ou de l'étain, présentant des propriétés alkylantes et/ou d'acide de Lewis. On peut citer à titre d'exemple le pentachlorure de rhénium ReCl₅, associé au tétrabutylétain (J.A. Moulijn *et al*., J. Chem. Soc. Chem. Comm., 1971, p. 1170), ou au triéthylaluminium en présence d'oxygène (Y. Uchida *et al*., Bull. Chem. Soc. Japan, vol. 45, 1972, p. 1158), ses dérivés tels que ReCl₄(PPh₃) et ReOCl₃(PPh₃)₂ associés au dichloroéthylaluminium (brevet français 1 561 025), le rhénium pentacarbonyle chlorure Re(CO)₅Cl associé au dichloroéthylaluminium (M.F. Farona *et al*., lnorg. Chem., vol. 15, 1976, p. 2129), le dirhéniumdécacarbonyle Re₂(CO)₁₀ en présence de dichloroisobutylaluminium comme cocatalyseur (S. Warwel *et al*., Makromol. Chem. Rapid Comm., vol. 4, 1983, p. 423), le méthyltrioxorhénium CH₃ReO₃ associé à un chloroalkylaluminium ou à un mélange de chlorure d'aluminium et de tétraméthylétain (W.A. Herrmann *et al*., Angew. Chem. Int. Ed. Engl., vol. 30, 1991, p. 1636, et vol. 27, 1988, p. 394).

Le document EP-A-0 444 265 décrit un procédé consistant à mettre en contact de l'heptoxyde de rhénium sous forme supportée avec un composé d'aluminium de formule (RO)AlR'₂, (RO)₂AlR', R' désignant un reste alkyl C1-C8.

L'objet de la présente invention est de décrire de nouveaux composés du rhénium et de l'aluminium, solubles en milieu hydrocarboné, et qui sont en eux-mêmes actifs pour la catalyse, et en particulier pour catalyser la réaction de métathèse, sans qu'il soit nécessaire (dans la plupart des cas) de leur adjoindre un cocatalyseur.

Ces nouveaux composés du rhénium et de l'aluminium répondent à la formule générale :

O₃Re-O-[Al(OR)(L)ₓ-O]ₙ-ReO₃ (A)

où R est un reste hydrocarbyle choisi dans le groupe formé par les restes alkényle, aryle, et aryle substitués par au moins un groupe alkyle, R contenant de 1 à 40 atomes de carbone, de préférence de 2 à 30 atomes de carbone, ce reste pouvant être substitué par au moins un groupe alkoxy ou par au moins un halogène, L est le solvant de synthèse, x est égal à 0 ou 1 et n est un nombre entier de 1 à 10. A titre d'exemple R peut être un reste phényle, méthyl-2-phényle, méthyl-4-phényle, méthoxy-2-phényle, méthoxy-4-phényle, diméthyl-2,6-phényle, diisopropyl-2,6-phényle, t-butyl-2-phényle, t-butyl-2-méthyl-4-phényle, di-t-butyl-2,6-phényle, di-t-butyl-2,6-méthyl-4-phényle, tri-t-butyl-2,4,6-phényle, phényl-2-phényle, diphényl-2,6-phényle, fluoro-2-phényle, fluoro-4-phényle, pentafluorophényle.

Le solvant L sera défini plus loin lors de la description d'un procédé de préparation.

L'activité catalytique de ces composés du rhénium et de l'aluminium (notamment en métathèse des oléfines) a pour conséquence leur instabilité lorsque l'on cherche à les isoler. Pour les caractériser, il est nécessaire de les stabiliser par addition, à la fin de leur synthèse, de ligands convenables. Les composés stabilisés, inactifs en catalyse, répondent à la formule générale :

O₃Re(L')-O-[Al(OR)(L)ₓ-O]ₙ-ReO₃(L') (B)

où L' est un ligand stabilisant choisi parmi les composés comportant au moins un atome d'oxygène, de soufre, d'azote, de phosphore ou d'arsenic, par exemple un éther, comme le diéthyléther, le diméthoxy-1,2-éthane ou le tétrahydrofurane, un sulfure comme le tétrahydrothiophène, une amine, comme la triéthylamine, la pyridine, la bipyridine-2,2' ou la N,N,N',N'-tétraméthyléthylènediamine, une phosphine, comme la triphénylphosphine ou le bis-(diphénylphosphino)-1,2-éthane. R, L, x et n ont été définis lors de l'expression de la formule du composé A.

L'identification des composés B stabilisés permet de caractériser a *posteriori* les composés A: la formule de A se déduit de celle de B par abstraction du ligand stabilisant L'. Par ailleurs, par décoordination de L', le composé A peut être obtenu à partir du composé B.

Les composés de rhénium et d'aluminium selon l'invention sont synthétisés par réaction entre l'heptoxyde de rhénium Re₂O₇ et au moins un composé de l'aluminium de formule (RO)_{q}AlR'ᵣ, où R est défini comme ci-dessus, R' est un reste alkyle contenant de 1 à 20 atomes de carbone, de préférence de 1 à 6 atomes de carbone, par exemple méthyle, éthyle, isobutyle, q et r sont égaux à 1 ou 2 de telle façon que la somme q + r soit égale à 3.

La réaction est effectuée dans un solvant L dit de synthèse, de préférence anhydre. Le solvant L est choisi dans le groupe constitué par les hydrocarbures, aliphatiques ou aromatiques, comme par exemple le pentane, l'hexane, le benzène, le toluène, les hydrocarbures halogénés, comme par exemple le dichlorométhane, le chlorobenzène, les éthers, comme par exemple le diéthyléther, le diisopropyléther, le diméthoxy-1,2-éthane, le tétrahydrofurane ou les sulfures comme le tétrahydrothiophène. On utilise de préférence un éther. Ledit solvant L tel que défini peut entrer dans la formule générale des composés A.

Le rapport molaire entre le composé d'aluminium et le rhénium peut être choisi de 0,2:1 à 10:1. On utilise de préférence un rapport de 0,5:1 à 5:1. L'ordre d'introduction des réactifs n'est pas critique, cependant il est préférable d'introduire le composé d'aluminium dans la solution ou la suspension d'heptoxyde de rhénium.

La préparation du composé (RO)_{q}AlR'ᵣ est connue de l'homme du métier. Tout procédé de préparation de ce composé convient, par exemple, par réaction d'un composé AlR'₃ sur un composé ROH, R et R' étant tels que précédemment définis, la réaction ayant lieu avantageusement dans un solvant L. Le composé ainsi préparé est mis au contact de l'heptoxyde de rhénium. De façon générale, le composé ainsi préparé est isolé, puis est mis au contact de l'heptoxyde de rhénium dans les conditions décrites par l'invention.

Dans un autre mode de réalisation, les réactifs utilisés pour former le composé (RO)_{q}AlR'ᵣ sont simultanément mis au contact de l'heptoxyde de rhénium, sans qu'il y ait donc séparation du produit (RO)_{q}AlR'ᵣ.

La température de réaction peut être de -80 à +100 °C, de préférence de -30 à +80 °C. Lorsque la réaction est terminée, on élimine avantageusement au moins en partie le solvant (par exemple on évapore le solvant sous vide) et le résidu (d'évaporation) est extrait par un solvant L₁, par exemple de préférence un hydrocarbure aliphatique, aromatique ou cycloaliphatique, ou encore un hydrocarbure halogéné ou un dérivé nitré, comme par exemple avantageusement le pentane, l'heptane, le benzène ou le toluène. La solution d'extraction est directement utilisable pour la catalyse, par exemple de métathèse.

Selon une variante, la solution obtenue contenant le composé A est directement utilisée comme composition catalytique. Une séparation préalable du solvant est également possible dans ce cas.

Si on souhaite isoler un composé stable B qui permette de caractériser *a posteriori* le composé A présent dans la solution d'extraction, on ajoute à celle-ci le ligand L'tel que défini ci-dessus, et on sépare le composé stabilisé B par toute méthode habituelle, par exemple par précipitation ou par cristallisation.

Un autre objet de la présente invention est l'utilisation de ces nouveaux composés de rhénium et d'aluminium pour la préparation de catalyseurs, et en particulier de catalyseurs pour la réaction de métathèse des oléfines.

Les composés A sont utilisables tels quels en particulier comme catalyseurs en phase homogène dans le solvant résultant de leur préparation. On peut aussi éliminer ce solvant par évaporation pour le remplacer par au moins un autre solvant plus avantageux. Les composés A peuvent être mis en oeuvre dans la métathèse dans un solvant constitué par un hydrocarbure aliphatique, cycloaliphatique ou aromatique, un hydrocarbure halogéné ou un dérivé nitré. On utilise de préférence un hydrocarbure ou un hydrocarbure halogéné.

Il est possible d'ajouter au composé A, bien que ce ne soit pas indispensable, au moins un cocatalyseur présentant des propriétés alkylantes et/ou d'acide de Lewis. Ce cocatalyseur peut être un composé d'aluminium, de bore, de gallium, d'étain ou de plomb. On peut citer à titre d'exemple le trichlorure d'aluminium, le tribromure d'aluminium, le dichloroéthylaluminium, le chlorodiéthylaluminium, le triéthylaluminium, le méthylaluminoxane, l'isobutylaluminoxane, le trifluorure de bore, le trichlorure de gallium, le tribromure de gallium, le tétraméthylétain, le tétraéthylétain, le tétrabutylétain, le tétraéthylplomb. On peut aussi utiliser ces divers composés en mélange entre eux.

Le procédé de métathèse des oléfines en présence du catalyseur défini ci-dessus se déroule à une température de -20 à +200 °C, de préférence de 0 à +100 °C, dans des conditions de pression telles que les réactifs soient maintenus au moins en majorité (plus de 50 %) en phase liquide ou en phase condensée.

Les oléfines susceptibles d'être métathétisées sont des monooléfines ayant de 2 à 30 atomes de carbone, par exemple l'éthylène, le propylène, les butènes, les pentènes, des cyclooléfines ayant de 3 à 20 atomes de carbone, par exemple le cyclopentène, le cyclooctène, le norbornène, des polyoléfines ayant de 4 à 30 atomes de carbone, par exemple l'hexadiène-1,4, l'octadiène-1,7, des cyclopolyoléfines ayant de 5 à 30 atomes de carbone, par exemple le cyclooctadiène-1,5, le norbornadiène, le dicyclopentadiène.

D'autres oléfines susceptibles d'être métathétisées sont les monooléfines ou les polyoléfines, linéaires ou cycliques, portant des groupes fonctionnels comme par exemple des halogènes ou des groupes ester. Le procédé peut également mettre en oeuvre en cométathèse un mélange des oléfines précédentes.

Les exemples suivants illustrent l'invention.

### EXEMPLE 1

### Préparation du bis-(di-t-butyl-2,6-méthyl-4-phénoxy)-isobutylaluminium :

Dans un ballon de 250 ml placé sous atmosphère d'argon et muni d'un barreau magnétique, on introduit une solution de 2 ml de triisobutylaluminium dans 30 ml de pentane, puis on injecte goutte-à-goutte, sous agitation et à température ambiante, une solution de 3,49 g de di-t-butyl-2,6-méthyl-4-phénol dans 40 ml de pentane. Après environ 30 heures de réaction, le pentane est évaporé sous vide et l'analyse du solide blanc restant indique qu'il est constitué essentiellement par le bis-(di-t-butyl-2,6-méthyl-4-phénoxy)-isobutylaluminium.

### Préparation du catalyseur (composé A1) :

Dans un ballon de 250 ml placé sous atmosphère d'argon et muni d'un barreau magnétique, on introduit 2,75 g d'heptoxyde de rhénium Re₂O₇ que l'on dissout dans 40 ml de tétrahydrofurane (THF). On refroidit la solution dans un bain de carboglace-acétone et on y ajoute en 30 minutes une solution de 2,97 g de bis-(di-t-butyl-2,6-méthyl-4-phénoxy)-isobutylaluminium dans 50 ml de tétrahydrofurane. Ceci correspond à un rapport molaire Al:Re = 0,5:1. A la fin de l'addition, on laisse la température remonter à l'ambiante et on poursuit l'agitation pendant encore 2 heures. On évapore alors le solvant sous vide pour obtenir une masse solide gris-noir, que l'on extrait ensuite 5 fois par 30 ml de pentane. La solution d'extraction au pentane a une couleur brun-rouge et son évaporation à sec donne 3,32 g d'une poudre brune contenant le composé A1. Cette poudre est remise en solution dans 30 ml d'heptane.

### Caractérisation du catalyseur (composé B1) :

On prélève 4,5 ml de la solution dans l'heptane du composé A1 préparé ci-dessus. On évapore à sec le solvant et on reprend par 10 ml de toluène. On ajoute à cette solution 0,11 g de bipyridine-2,2' (bipy) dissous dans 3 ml de toluène. Par refroidissement à -20 °C, on obtient 0,1 g du composé B1 sous forme de microcristaux noirs. Analyse par RMN ¹H (CD₂Cl₂) : δ [C(CH₃)₃] = 1,40 (s), δ (p-CH₃) = 2,23, δ (C₆H₂) = 6,95, δ (bipy coordiné) = 7,32-7,81-8,41-8,64 ppm. Analyse élémentaire : C=47,46; H=5,66; N=3,17; Al=4,33; Re=26,4 % poids, calculé pour B1 : O₃Re(bipy)-O-[Al(OC₆H₂-CH₃-(t-C₄H₉)₂)(THF)-O]₂-ReO₃(bipy) : C=47,54; H=5,33; N=3,82; Al=3,69; Re=25,4 % poids. On en déduit que le composé A1 préparé ci-dessus répond à la formule : O₃Re-O-[Al(OC₆H₂-CH₃-(t-C₄H₉)₂)(THF)-O]₂-ReO₃.

### EXEMPLE 2

### Utilisation du composé A1 en catalyse de métathèse du pentène-2 :

On prélève 6,3 ml de la solution dans l'heptane du composé A1 préparé dans l'exemple 1, que l'on transfère dans un ballon de 100 ml placé sous atmosphère d'argon et équipé d'un barreau magnétique. On y ajoute 14 ml d'heptane et on plonge le ballon dans un bain thermostatique à 25 °C. On injecte alors dans cette solution 5 ml de pentène-2 (mélange cis + trans). Après une heure de réaction, la conversion du pentène-2 est de 50 %. La réaction est donc complète puisque la conversion maximum à l'équilibre thermodynamique est de 50 %. Les produits sont constitués uniquement par les butènes-2 cis et trans et les hexènes-3 cis et trans, dans un rapport molaire butènes : hexènes = 1:1.

### EXEMPLE 3

### Préparation du catalyseur (composé A2) :

Le bis-(di-t-butyl-2,6-méthyl-4-phénoxy)-isobutylaluminium est préparé selon le mode opératoire décrit dans l'exemple 1. Dans un ballon de 250 ml placé sous atmosphère d'argon et muni d'un barreau magnétique, on introduit 1,5 g d'heptoxyde de rhénium Re₂O₇ que l'on dissout dans 25 ml de tétrahydrofurane. On refroidit la solution dans un bain de carboglace-acétone et on y ajoute en 30 minutes une solution de 3,24 g de bis-(di-t-butyl-2,6-méthyl-4-phénoxy)-isobutylaluminium dans 45 ml de tétrahydrofurane. Ceci correspond à un rapport molaire Al:Re = 1:1. A la fin de l'addition, on laisse la température remonter à l'ambiante et on poursuit l'agitation pendant encore 2 heures. On évapore alors le solvant sous vide pour obtenir une masse solide gris-noir, que l'on extrait ensuite 5 fois par 30 ml de pentane. La solution d'extraction au pentane a une couleur brun-rouge et son évaporation à sec donne 3,57 g d'une poudre brun foncé contenant le composé A2. Cette poudre est remise en solution dans 30 ml d'heptane.

### Caractérisation du catalyseur (composé B2) :

On prélève 11 ml de la solution dans l'heptane du composé A2 préparé ci-dessus. On évapore à sec le solvant et on reprend par 5 ml de toluène. On ajoute à cette solution 0,41 g de bipyridine-2,2' dissous dans 5 ml de toluène. Par refroidissement à -20 °C, on obtient 0,2 g du composé B2 sous forme de microcristaux noirs. Analyse par RMN ¹H (CD₂Cl₂) : δ [C(CH₃)₃] = 1,46 (s), δ (p-CH₃) = 2,29, δ (C₆H₂) = 7,01, δ (bipy coordiné) = 7,85-8,46-8,68 ppm. Analyse élémentaire : C=51,57; H=6,22; N=3,52 % poids, calculé pour B2 : O₃Re(bipy)-O-[Al(OC₆H₂-CH₃-(t-C₄H₉)₂)(THF)-O]₃-ReO₃(bipy) : C=51,39; H=6,06; N=3,11 % poids. On en déduit que le composé A2 préparé ci-dessus répond à la formule : O₃Re-O-[Al(OC₆H₂-CH₃-(t-C₄H₉)₂)(THF)-O]₃-ReO₃.

### EXEMPLE 4

### Utilisation du composé A2 en catalyse de métathèse du pentène-2 :

On prélève 3 ml de la solution dans l'heptane du composé A2 préparé dans l'exemple 3, que l'on transfère dans un ballon de 100 ml placé sous atmosphère d'argon et équipé d'un barreau magnétique. On y ajoute 20 ml d'heptane et on plonge le ballon dans un bain thermostatique à 25 °C. On injecte alors dans cette solution 5 ml de pentène-2 (mélange cis + trans). Après une heure de réaction, la conversion du pentène-2 est de 38 % (la conversion maximum à l'équilibre thermodynamique est de 50 %). Les produits sont constitués uniquement par les butènes-2 cis et trans et les hexènes-3 cis et trans, dans un rapport molaire butènes : hexènes = 1:1.

### EXEMPLE 5

### Utilisation du composé A2 en catalyse de métathèse du pentène-2 :

On prélève 3,7 ml de la solution dans l'heptane du composé A2 préparé dans l'exemple 3, que l'on transfère dans un ballon de 100 ml placé sous atmosphère d'argon et équipé d'un barreau magnétique. On évapore l'heptane à sec sous vide et on redissout le solide résiduel dans 20 ml de chlorobenzène. On plonge le ballon dans un bain thermostatique à 25 °C. On injecte alors dans cette solution 5 ml de pentène-2 (mélange cis + trans). Après une heure de réaction, la conversion du pentène-2 est de 50 % (la conversion maximum à l'équilibre thermodynamique est de 50 %). Les produits sont constitués uniquement par les butènes-2 cis et trans et les hexènes-3 cis et trans, dans un rapport molaire butènes : hexènes = 1:1.

### EXEMPLE 6

### Utilisation du composé A2 en catalyse de métathèse de l'oléate de méthyle

On prélève 3 ml de la solution dans l'heptane du composé A2 préparé dans l'exemple 3, que l'on transfère dans un ballon de 100 ml placé sous atmosphère d'argon et équipé d'un barreau magnétique. On y ajoute 20 ml d'heptane et on plonge le ballon dans un bain thermostatique à 25 °C. On injecte alors dans cette solution 5 ml d'oléate de méthyle. Après une heure de réaction, la conversion de l'oléate est de 16 %.

### EXEMPLE 7

### Utilisation du composé A2 en catalyse de polymérisation du cyclopentène par ouverture de cycle (polymérisation par métathèse) :

Dans un ballon de 100 ml placé sous atmosphère d'argon et équipé d'un barreau magnétique on introduit 20 ml d'heptane et on plonge le ballon dans un bain thermostatique à 25 °C. On injecte alors 5 ml de cyclopentène, puis 3 ml de la solution dans l'heptane du composé A2 préparé dans l'exemple 3. Après 4 minutes de réaction, la viscosité du milieu réactionnel a fortement augmenté. Après 1,5 heure, l'heptane est évaporé sous vide, puis le produit est repris au benzène et le polymère est précipité au méthanol. On recueille 2,14 g de polymère.

### EXEMPLE 8

### Utilisation du composé A2 en catalyse de polymérisation du norbornène par ouverture de cycle :

Dans un ballon de 100 ml placé sous atmosphère d'argon et équipé d'un barreau magnétique on introduit 5 ml d'heptane et on plonge le ballon dans un bain thermostatique à 25 °C. On injecte alors 0,97 g de norbornène, puis 3,5 ml de la solution dans l'heptane du composé A2 préparé dans l'exemple 3. Après 30 secondes de réaction, le milieu réactionnel est pris en masse.

### EXEMPLE 9

Dans un ballon de 250 ml placé sous atmosphère d'argon et muni d'un barreau magnétique, on introduit une solution de 2 ml de triisobutylaluminium dans 15 ml de pentane, puis on injecte goutte-à-goutte, sous agitation et à température ambiante, une solution de 1,95 g de diphényl-2,6-phénol dans un mélange de 15 ml de pentane et 20 ml de toluène. Après environ 30 heures de réaction, le solvant est évaporé sous vide et le solide blanc résiduel est recristallisé dans le toluène. On obtient 1,32 g de produit sous forme de cristaux blancs dont l'analyse indique qu'il sont constitués par le bis-(diphényl-2,6-phénoxy)-isobutylaluminium.

Dans un ballon de 250 ml placé sous atmosphère d'argon et muni d'un barreau magnétique, on introduit 0,556 g d'heptoxyde de rhénium Re₂O₇ que l'on dissout dans 10 ml de tétrahydrofurane. On refroidit la solution dans un bain de carboglace-acétone et on y ajoute en 30 minutes une solution de 1,32 g de bis-(diphényl-2,6-phénoxy)-isobutylaluminium dans 15 ml de tétrahydrofurane. A la fin de l'addition, on laisse la température remonter à l'ambiante et on poursuit l'agitation pendant encore 5 heures. On évapore alors le solvant sous vide pour obtenir une masse solide gris-noir, que l'on extrait ensuite par 15 ml de toluène. La solution d'extraction a une couleur brun foncé et est directement utilisée en catalyse de métathèse du pentène-2.

Le ballon contenant la solution d'extraction est plongé dans un bain thermostatique à 25 °C. On injecte alors dans cette solution 3 ml de pentène-2 (mélange cis + trans). Après une heure de réaction, la conversion du pentène-2 est de 3 %. Après 4 jours de réaction, la conversion du pentène-2 est de 29 %. Les produits sont constitués uniquement par les butènes-2 cis et trans et les hexènes-3 cis et trans, dans un rapport molaire butènes : hexènes = 1:1.

### EXEMPLE 10

### Préparation du catalyseur :

Le bis-(di-t-butyl-2,6-méthyl-4-phénoxy)-isobutylaluminium est préparé selon le mode opératoire décrit dans l'exemple 1. Dans un ballon de 250 ml placé sous atmosphère d'argon et muni d'un barreau magnétique, on introduit 1 g d'heptoxyde de rhénium Re₂O₇ et 30 ml de diéthyléther. On refroidit la solution dans un bain de carboglace-acétone et on y ajoute en 5 minutes une solution de 2,16 g de bis-(di-t-butyl-2,6-méthyl-4-phénoxy)-isobutylaluminium dans 30 ml de diéthyléther. A la fin de l'addition, on laisse la température remonter à l'ambiante et on poursuit l'agitation pendant encore 2 heures. On évapore alors le solvant sous vide pour obtenir une masse solide brun foncé, que l'on extrait ensuite 3 fois par 30 ml de pentane. La solution d'extraction au pentane a une couleur brun-rouge et son évaporation à sec donne 2,66 g d'une poudre rouge foncé. Cette poudre est remise en solution dans 20 ml d'heptane.

### Utilisation en catalyse de métathèse du pentène-2 :

On prélève 3 ml de la solution dans l'heptane du composé préparé ci-dessus, que l'on transfère dans un ballon de 100 ml placé sous atmosphère d'argon, équipé d'un barreau magnétique et plongé dans un bain thermostatique à 25 °C. On injecte alors dans le ballon 5 ml de pentène-2 (mélange cis + trans). Après 5 minutes de réaction, la conversion du pentène-2 est de 50 % (ce qui représente la conversion maximum à l'équilibre thermodynamique). Les produits sont constitués uniquement par les butènes-2 cis et trans et les hexènes-3 cis et trans.

### EXEMPLE 11

### Préparation du catalyseur :

Le bis-(di-t-butyl-2,6-méthyl-4-phénoxy)-isobutylaluminium est préparé selon le mode opératoire décrit dans l'exemple 1. Dans un ballon de 250 ml placé sous atmosphère d'argon et muni d'un barreau magnétique, on introduit 1 g d'heptoxyde de rhénium Re₂O₇ et 15 ml de diisopropyléther. On refroidit la solution dans un bain de carboglace-acétone et on y ajoute en 5 minutes une solution de 2,16 g de bis-(di-t-butyl-2,6-méthyl-4-phénoxy)-isobutylaluminium dans 30 ml de diisopropyléther. A la fin de l'addition, on laisse la température remonter à l'ambiante et on poursuit l'agitation pendant encore 2 heures. On évapore alors le solvant sous vide pour obtenir une masse solide brun foncé, que l'on extrait ensuite 4 fois par 20 ml de pentane. La solution d'extraction au pentane a une couleur brun-rouge et son évaporation à sec donne 2,48 g d'une poudre rouge foncé. Cette poudre est remise en solution dans 20 ml d'heptane.

### Utilisation en catalyse de métathèse du pentène-2 :

On prélève 3 ml de là solution dans l'heptane du composé préparé ci-dessus, que l'on transfère dans un ballon de 100 ml placé sous atmosphère d'argon, équipé d'un barreau magnétique et plongé dans un bain thermostatique à 25 °C. On injecte alors dans le ballon 5 ml de pentène-2 (mélange cis + trans). Après 2 minutes de réaction, la conversion du pentène-2 est de 47 % (la conversion maximum à l'équilibre thermodynamique est de 50 %). Les produits sont constitués uniquement par les butènes-2 cis et trans et les hexènes-3 cis et trans.

## Revendications

1. Composé de rhénium et d'aluminium de formule générale :
O₃Re-O-[Al(OR)(L)ₓ-O]ₙ-ReO₃
dans laquelle n est un nombre entier de 1 à 10 et x est égal à 0 ou 1, R est un reste hydrocarbyle contenant de 1 à 40 atomes de carbone et choisi dans le groupe formé par les restes alkényle, aryle et aryle substitué par au moins un groupe alkyle, L représentant le solvant de synthèse et choisi dans le groupe constitué par les hydrocarbures aliphatiques, les hydrocarbures aromatiques, les hydrocarbures halogénés, les éthers, les sulfures .

2. Composé selon la revendication 1, dans lequel R est choisi dans le groupe formé par les restes alkényle, aryle et aryle substitué par au moins un groupe alkyle, lesdits restes étant substitués par au moins un groupe alkoxy ou au moins un halogène.

3. Composé selon l'une des revendications précédentes, dans lequel R contient de 2 à 30 atomes de carbone.

4. Composé selon l'une des revendications précédentes, dans lequel R est choisi dans le groupe formé par les restes phényle, méthyl-2-phényle, méthyl-4-phényle, méthoxy-2-phényle, méthoxy-4-phényle, diméthyl-2,6-phényle, diisopropyl-2,6-phényle, t-butyl-2-phényle, t-butyl-2-méthyl-4-phényle, di-t-butyl-2,6-phényle, di-t-butyl-2,6-méthyl-4-phényle, tri-t-butyl-2,4,6-phényle, phényl-2-phényle, diphényl-2,6-phényle, fluoro-2-phényle, fluoro-4-phényle, pentafluorophényle.

5. Procédé de préparation d'un composé selon l'une des revendications précédentes par mise en contact de l'heptoxyde de rhénium avec au moins un composé de l'aluminium de formule (RO)_{q}AlR'ᵣ, dans laquelle R est un reste hydrocarbyle contenant de 1 à 40 atomes de carbone et choisi dans le groupe formé par les restes alkényle, aryle et aryle substitué par au moins un groupe alkyle, R' est un reste alkyle contenant de 1 à 20 atomes de carbone et q et r sont égaux à 1 ou 2 avec q + r = 3.

6. Procédé de préparation selon la revendication 5 dans lequel le composé (RO)_{q}AlR'ᵣ est préparé par réaction d'un composé de formule AlR'₃ avec un composé de formule ROH, la réaction ayant lieu dans un solvant L.

7. Procédé selon l'une des revendications 5 ou 6 dans lequel la mise en contact est effectuée dans un solvant L choisi dans le groupe formé par les hydrocarbures aliphatiques, les hydrocarbures aromatiques, les hydrocarbures halogénés, les éthers, les sulfures.

8. Procédé selon l'une des revendications 5 à 7, dans lequel le solvant L est anhydre.

9. Procédé selon l'une des revendications 5 à 8, dans lequel le rapport molaire entre le composé d'aluminium et le rhénium est compris entre 0,2:1 et 10:1.

10. Procédé selon l'une des revendications 5 à 9, dans lequel le rapport molaire entre le composé d'aluminium et le rhénium est compris entre 0,5:1 et 5:1.

11. Procédé selon l'une des revendications 5 à 10, dans lequel la température est de -80 à 100 °C.

12. Procédé selon l'une des revendications 5 à 11, dans lequel la température est de -30 à 80 °C.

13. Procédé selon l'une des revendications 5 à 12, dans lequel R' contient 1 à 6 atomes de carbone.

14. Procédé selon l'une des revendications 5 à 13, comportant la préparation du composé (RO)_{q}AlR'ᵣ puis la mise en contact dudit composé préalablement isolé avec l'heptoxyde de rhénium.

15. Procédé selon l'une des revendications 5 à 14, comportant, après la mise en contact du composé (RO)_{q}AlR'ᵣ et de l'heptoxyde de rhénium, l'élimination au moins en partie du solvant présent lors de ladite mise en contact et l'extraction du résidu obtenu par un autre solvant L₁.

16. Procédé selon la revendication 15, dans lequel l'autre solvant L₁ est choisi dans le groupe formé par les hydrocarbures aliphatiques, les hydrocarbures cycloaliphatiques, les hydrocarbures aromatiques, les hydrocarbures halogénés, les dérivés nitrés.

17. Composé stable du rhénium et d'aluminium de formule générale :
O₃Re(L')-O-[Al(OR)(L)ₓ-O]ₙ-ReO₃(L')
dans laquelle R est un reste hydrocarbyle contenant de 1 à 40 atomes de carbone et choisi dans le groupe formé par les restes alkényles, aryle et aryle sustitué par au moins un groupe alkyle, n est un nombre entier de 1 à 10, x est égal à 0 ou 1, L représentant le solvant de synthèse choisi dans le groupe constitué par les hydrocarbures alphatiques, les hydrocarbures aromatiques, les hydrocarbures halogénés, les éthers, les sulfures, et L' est un ligand stabilisant choisi dans le groupe formé par les composés comportant au moins un atome d'oxygène, de soufre, d'azote, de phosphore ou d'arsenic.

18. Composé selon la revendication 17 dans lequel L' est choisi dans le groupe constitué par les éthers, les sulfures, les amines, les phosphines.

19. Utilisation d'un composé selon l'une des revendications 1 à 4 pour la préparation de catalyseurs.

20. Utilisation d'un composé obtenu par le procédé de préparation selon l'une des revendications 5 à 16 pour la préparation de catalyseurs.

## Claims

1. A compound of rhenium and aluminium of the general formula:
O₃Re-O-[Al(OR)(L)ₓ-O]ₙ - ReO₃
wherein n is an integer of from 1 to 10 and x is equal to 0 or 1 and R is a hydrocarbyl residue containing from 1 to 40 carbon atoms and selected from the group formed by alkenyl residues, aryl residues, and aryl residues which are substituted by at least one alkyl group, L represents the synthesis solvent and is selected from the group formed by aliphatic hydrocarbons, aromatic hydrocarbons, halogenated hydrocarbons, ethers and sulphides.

2. A compound according to claim 1 wherein R is selected from the group formed by the following residues : alkenyl, aryl, and aryl which are substituted by at least one alkyl group, said residues being substituted by at least one alkoxy group or at least one halogen.

3. A compound according to one of the preceding claims wherein R contains from 2 to 30 carbon atoms.

4. A compound according to one of the preceding claims wherein R is selected from the group formed by the following residues : phenyl, 2-methylphenyl, 4-methylphenyl, 2-methoxyphenyl, 4-methoxyphenyl, 2,6-dimethylphenyl, 2,6-diisopropylphenyl, 2-t-butylphenyl, 2-t-butyl-4-methylphenyl, 2,6-di-t-butylphenyl, 2,6-di-t-butyl-4-methylphenyl, 2,4,6-tri-t-butylphenyl, 2-phenylphenyl, 2,6-diphenylphenyl, 2-fluorophenyl, 4-fluorophenyl and pentafluorophenyl.

5. A process for the preparation of a compound according to one of the preceding claims by bringing rhenium heptoxide into contact with at least one compound of aluminium of the formula : (RO)_{q}AlR'ᵣ, wherein R is a hydrocarbyl residue containing from 1 to 40 carbon atoms and is selected from the group formed by alkenyl residues, aryl residues and aryl residues which are substituted by at least one alkyl group, R' is an alkyl residue containing from 1 to 20 carbon atoms and q and r are equal to 1 or 2 with q+r=3.

6. A process for the preparation of a compound according to claim 5 in which the compound (RO) _{q}AlR'ᵣ is prepared by reaction of a compound of the formula AIR'3 with a compound of the formula ROH, the reaction occuring in a solvent L.

7. A process according to one of claims 5 and 6 wherein the contacting operation is effected in a solvent L selected from the group formed by aliphatic hydrocarbons, aromatic hydrocarbons, halogenated hydrocarbons, ethers and sulphides.

8. A process according to one of claims 5 to 7 wherein the solvent L is anhydrous.

9. A process according to one of claims 5 to 8 wherein the molar ratio between the aluminium compound and the rhenium is between 0.2:1 and 10:1.

10. A process according to one of claims 5 to 9 wherein the molar ratio between the aluminium compound and the rhenium is between 0.5:1 and 5:1.

11. A process according to one of claims 5 to 10 wherein the temperature is -80 to 100°C.

12. A process according to one of claims 5 to 11 wherein the temperature is from -30 to 80°C.

13. A process according to one of claims 5 to 12 wherein R' contains from 1 to 6 carbon atoms.

14. A process according to one of claims 5 to 13 comprising preparation of the compound (RO)_{q}AlR'ᵣ and then contacting said compound which has been previously isolated with rhenium heptoxide.

15. A process according to one of claims 5 to 14 comprising, after the contacting operation, at least partial elimination of the solvent present in the contacting operation and extraction of the residue obtained by another solvent L₁.

16. A process according to claim 15 wherein the other solvent L₁ is selected from the group formed by aliphatic hydrocarbons, cycloaliphatic hydrocarbons, aromatic hydrocarbons, halogenated hydrocarbons and nitro derivatives.

17. A stable compound of rhenium and aluminium of the general formula :
O₃Re(L')-O-[Al(OR)(L)ₓ-O]ₙ-ReO₃(L')
wherein R is a hydrocarbyl residue containg from 1 to 40 carbon atoms and selected from the group formed by alkenyl residues, aryl residues, and aryl residues which are substituted by at least one alkyl group, n is an integer of from 1 to 10, x is equal to 0 or 1, L represents the synthesis solvent and is selected from the group formed by aliphatic hydrocarbons, aromatic hydrocarbons, halogenated hydrocarbons, ethers and sulphides and L' is a stabilizing ligand selected from the group formed by the compounds comprising at least one atom of oxygen, sulphur, nitrogen, phosphorous or arsenic.

18. A compound according to claim 17 wherein L' is selected from the group formed by ethers, sulphides, amines and phosphines.

19. Use of a compound according to one of claims 1 to 4 for the preparation of catalysts.

20. Use of a compound obtained by the preparation process according to one of claims 5 to 16 for the preparation of catalysts.

## Patentansprüche

1. Verbindung von Rhenium und von Aluminium einer allgemeinen Formel:
O₃Re-O-[Al(OR)(L)ₓ-O]ₙ-ReO₃
in der n eine ganze Zahl von 1 bis 10 ist und x gleich 0 oder 1 ist, R ein Hydrocarbylrest ist, der 1 bis 40 Kohlenstoffatome enthält und gewählt ist aus der Gruppe, die gebildet wird durch die Alkenyl-, Aryl- und Arylreste, die durch wenigstens eine Alkylgruppe substituiert sind, wobei L das Syntheselösungsmittel darstellt und gewählt ist aus der Gruppe, die besteht aus den aliphatischen Kohlenwasserstoffen, den aromatischen Kohlenwasserstoffen, den halogenierten Kohlenwasserstoffen, Ethern, Thioethem.

2. Verbindung nach Anspruch 1, bei der R aus der Gruppe gewählt wird, die gebildet wird durch die Alkenyl-, Aryl- und Arylreste, die durch wenigstens eine Alkylgruppe substituiert sind, wobei diese Reste durch wenigstens eine Alkoxygruppe oder wenigstens ein Halogen substituiert sind.

3. Verbindung nach einem der vorhergehenden Ansprüche bei der R 2 bis 30 Kohlenstoffatome enthält.

4. Verbindung nach einem der vorhergehenden Ansprüche bei der R gewählt ist aus der Gruppe, die gebildet wird durch die Phenyl-, 2-Methyl-Phenyl-, 4-Methyl-Phenyl-, 2-Methoxy-Phenyl-, 4-Methoxy-Phenyl-, 2,6-Dimethyl-Phenyl-, 2,6 Diisopropyl-Phenyl, 2-t-Butyl-Phenyl, 2-t-Butyl-4-Methyl-Phenyl, 2,6-di-t-Butyl-Phenyl-, 2,6-di-t-Butyl-4-Methyl-Phenyl-, 2-,4-,6-tri-t-Butyl-Phenyl-, 2-Phenyl-Phenyl-, 2,6-Diphenyl-Phenyl-, 2-Fluoro-Phenyl-, 4-Fluoro-Phenyl-, Pentafluorophenylreste.

5. Verfahren zur Herstellung einer Verbindung nach einem der vorhergehenden Ansprüche durch Kontaktieren des Rheniumheptoxyds mit wenigstens einer Aluminiumverbindung mit einer Formel (RO)_{q}AlR'ᵣ, in der R ein Hydrocarbylrest ist, der 1 bis 40 Kohlenstoffatome enthält und gewählt ist aus der Gruppe, die gebildet wird durch die Alkenyl-, Aryl- und Arylreste, die durch wenigstens eine Alkylgruppe substituiert sind; R' ein Alkylrest ist, der 1 bis 20 Kohlenstoffatome enthält und q und r gleich 1 oder 2 sind mit q + r = 3.

6. Herstellungsverfahren nach Anspruch 5, bei dem die (RO)_{q}AlR'ᵣ-Verbindung hergestellt wird durch Reaktion einer Verbindung einer Formel AlR'₃ mit einer Verbindung der Formel ROH, wobei die Reaktion in einem Lösungsmittel L stattfindet.

7. Verfahren nach einem der Ansprüche 5 oder 6, bei dem das Kontaktieren in einem Lösungsmittel L durchgeführt wird, das aus der Gruppe gewählt ist, die gebildet wird durch die aliphatischen Kohlenwasserstoffe, die aromatischen Kohlenwasserstoffe, die halogenierten Kohlenwasserstoffe, die Ether, die Thioether.

8. Verfahren nach einem der Ansprüche 5 bis 7, bei dem das Lösungsmittel L wasserfrei ist.

9. Verfahren nach einem der Ansprüche 5 bis 8, bei dem das molare Verhältnis zwischen der Aluminiumverbindung und Rhenium zwischen 0,2:1 und 10:1 liegt.

10. Verfahren nach einem der Ansprüche 5 bis 9, bei dem das molare Verhältnis zwischen der Aluminiumverbindung und Rhenium zwischen 0,5:1 und 5:1 liegt.

11. Verfahren nach einem der Ansprüche 5 bis 10, bei dem die Temperatur zwischen -80 und 100°C liegt.

12. Verfahren nach einem der Ansprüche 5 bis 11, bei dem die Temperatur zwischen -30 und 80°C liegt.

13. Verfahren nach einem der Ansprüche 5 bis 12, bei dem R' 1 bis 6 Kohlenstoffatpme enthält.

14. Verfahren nach einem der Ansprüche 5 bis 13, das die Herstellung der (RO)_{q}AlR'ᵣ -Verbindung umfasst und dann das Kontaktieren der vorher isolierten Verbindung mit Rheniumheptoxyd.

15. Verfahren nach einem der Ansprüche 5 bis 14, das nach dem Kontaktieren der (RO)_{q}AlR'ᵣ -Verbindung und dem Rheniumheptoxyd die Entfernung wenigstens eines Teils des Lösungsmittels umfasst, welches bei dem Kontaktieren vorliegt und die Extraktion des erhaltenen Rückstandes durch ein anderes Lösungsmittel L₁.

16. Verfahren nach Anspruch 15, bei dem das andere Lösungsmittel L₁ gewählt wird aus der Gruppe, die gebildet wird durch die aliphatischen Kohlenwasserstoffe, die cycloaliphatischen Kohlenwasserstoffe, die aromatischen Kohlenwasserstoffe, die halogenierten Kohlenwasserstoffe, die nitrierten Derivate.

17. Stabile Verbindung von Rhenium und von Aluminium einer allgemeinen Formel:
O₃Re(L')-O-[Al(OR)(L)ₓ-O]ₙ-ReO₃(L')
in der R ein Hydrocarbylrest ist, der 1 bis 40 Kohlenstoffatome enthält und gewählt ist aus der Gruppe, die gebildet wird durch die Alkenyl-, Aryl- und Arylreste, die durch wenigstens eine Alkylgruppe substituiert sind, n eine ganze Zahl von 1 bis 10 ist; x = 0 oder 1 ist, wobei L das Syntheselösungsmittel darstellt, das gewählt ist aus der Gruppe, die besteht aus den aliphatischen Kohlenwasserstoffen, den aromatischen Kohlenwasserstoffen, den halogenierten Kohlenwasserstoffen, den Ethern, den Thioethern, und L ein stabilisierender Ligand ist, gewählt aus der Gruppe, die gebildet ist aus den Verbindungen, welche wenigstens ein Sauerstoff-, Schwefel-, Stickstoff-, Phosphor- oder Arsenatom umfassen.

18. Verbindung nach Anspruch 17, bei dem L' aus der Gruppe gewählt wird, die gebildet wird durch die Ether, die Thioether, die Amine, die Phosphine.

19. Verwendung einer Verbindung nach einem der Ansprüche 1 bis 4 für die Herstellung von Katalysatoren.

20. Verwendung einer Verbindung, erhalten durch ein Herstellungsverfahren nach einem der Ansprüche 5 bis 16 für die Herstellung von Katalysatoren.
